# FASCICULE DE BREVET EUROPEEN

(11) **EP 1 053 894 B1**
(45) Date de publication et mention de la délivrance du brevet: **15.06.2005**
(21) Numéro de dépôt: 00401380.1
(22) Date de dépôt: 19.05.2000
(51) Int. Cl.: B60C 23/04, B60C 23/20

(54) **Système de contrôle de la pression des pneumatiques**
System zur Luftdruckkontrolle von Kfz-Reifen
System for monitoring the air pressure of vehicle tyres

(30) Priorité: 20.05.1999 FR 9906396
(43) Date de publication de la demande: 22.11.2000
(73) Titulaire: JOHNSON CONTROLS AUTOMOTIVE ELECTRONICS, 95526 Cergy Pontoise Cédex (FR)
(72) Inventeur: Delaporte, Francis, 95520 Osny (FR)
(74) Mandataire: Bloch, Gérard

(56) Documents cités:
- EP-A- 0 016 991
- US-A- 4 942 510
- US-A- 5 231 872

## Description

Un système de contrôle de la pression d'un pneumatique de roue de véhicule comprend au moins, inséré dans la jante de la roue, un capteur de pression, un émetteur et une pile et un condensateur d'alimentation de l'émetteur.

Un système selon le préambule de la revendication 1 est connu de US 5,231,872 A.

Le système doit émettre régulièrement vers le calculateur central du véhicule des rafales (bursts) de bits d'informations relatives à la pression du pneumatique, naturellement, mais également, par exemple, à la température, la tension de la pile d'alimentation, l'identification de la roue.

Le système doit émettre un nombre Ne déterminé, généralement cinq, de rafales identiques et un nombre Nr de ces rafales doit avoir été reçu pour qu'il soit considéré que les informations du moment ont bien été émises et reçues. L'émission des rafales peut s'effectuer, pour fixer les idées, toutes les heures, si le véhicule est à l'arrêt, toutes les six minutes, si le véhicule roule.

Par ailleurs, le système est activé à intervalles réguliers, par exemple toutes les deux secondes pour l'émission des rafales. Enfin, les rafales, chacun d'une durée t_{b}, généralement de 8 ms, sont espacés, généralement encore de 12 ms. Ainsi, il est émis des trains de cinq rafales, d'une durée de 88 ms pendant une période d'activation de 2s.

Si l'on veut que le système résiste à des températures très basses, de l'ordre de -40°C, il faut utiliser des piles d'alimentation d'un coût élevé, de l'ordre de 2 Euros.

La demanderesse a cherché à s'affranchir de cette contrainte en utilisant des piles bon marché, d'un coût inférieur à 1 Euro, mais qui, par conséquent, ne sont pas faites pour des températures aussi basses, comme par exemple des piles au lithium recyclables.

A cet effet, l'invention concerne un système de contrôle de la pression d'un pneumatique d'une roue de véhicule comprenant
- un capteur de pression,
- un émetteur d'émission de données de pression
- une pile d'alimentation,
- un capteur de température et
- un processeur,
le système étant caractérisé par le fait que l'émission des données de pression est commandée par le processeur en fonction de la température, en deça d'un seuil de temperature prédéterminé.

De préférence, un condensateur est monté en parallèle sur la pile d'alimentation pour assurer l'alimentation de l'émetteur pendant les périodes d'émission et pour se recharger hors de ces périodes d'émission.

De préférence encore, les données de pression étant émises par trains de rafales identiques et le système étant activé à intervalles réguliers, le processeur est agencé pour, en deça d'un seuil de température, étaler l'émission des rafales d'un train sur plusieurs intervalles d'activation, avantageusement, une rafale par intervalle d'activation.

Aux basses températures, la résistance de la pile augmente considérablement et l'étalement de l'émission des rafales laisse entre deux rafales plus de temps à la pile pour recharger le condensateur.

Dans la forme de réalisation préférée du système de l'invention, la pile, le condensateur, les capteurs, le processeur et l'émetteur sont montés en parallèle.

L'invention sera mieux comprise à l'aide de la description suivante d'une forme de réalisation préférée du système de contrôle de la pression d'un pneumatique de l'invention, en référence au dessin annexé, sur lequel :
- la figure 1 est une représentation schématique du système de contrôle de pression de l'invention, logé dans un pneumatique d'un véhicule automobile dont le calculateur de bord exploite les mesures de pression,
- la figure 2 est un schéma par blocs du système de la figure 1, et
- les figures 3 et 4 illustrent, en fonction de temps t, l'émission de rafales de signaux de télémesure de pression.

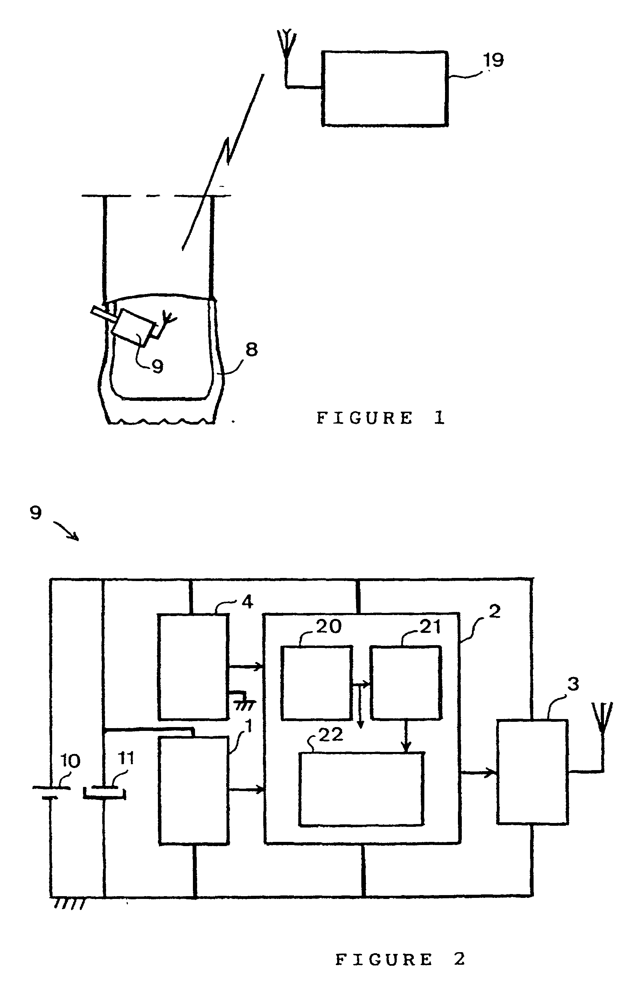

Le système de contrôle de pression, portant la référence 9 sur la figure 1, est monté à l'intérieur d'un pneumatique 8 de roue de véhicule, ici une automobile, et précisément fixé à la valve. Un calculateur de bord 19 du véhicule reçoit des télémesures de pression émises par le système 9 et les exploite pour avertir le conducteur de toute anomalie.

Comme le montre la figure 2, le système 9 comporte un capteur de pression 1 commandant un émetteur sans fil 3, ici radio, à travers un processeur 2 de gestion des émissions de l'émetteur 3 vers le calculateur de bord 19. Un capteur de température 4 est relié en sortie au processeur 2 pour la gestion des émissions de l'émetteur 3. Une pile 10, ici au lithium, alimente l'ensemble des circuits 1, 2, 3, 4, qui sont montés en parallèle, entre une liaison d'alimentation positive et la masse.

Dans cet exemple, un condensateur 11 est monté en parallèle sur la pile d'alimentation 10 pour assurer en particulier l'alimentation de l'émetteur 3 pendant les périodes d'émission et pour se recharger hors de ces périodes d'émission.

Le processeur 2 comporte un circuit de base de temps 20 qui en rythme le fonctionnement et en particulier commande un circuit 21 de mise en veille et de réveil des autres circuits du processeur 2, tels qu'un bloc de calcul (ALU) 22.

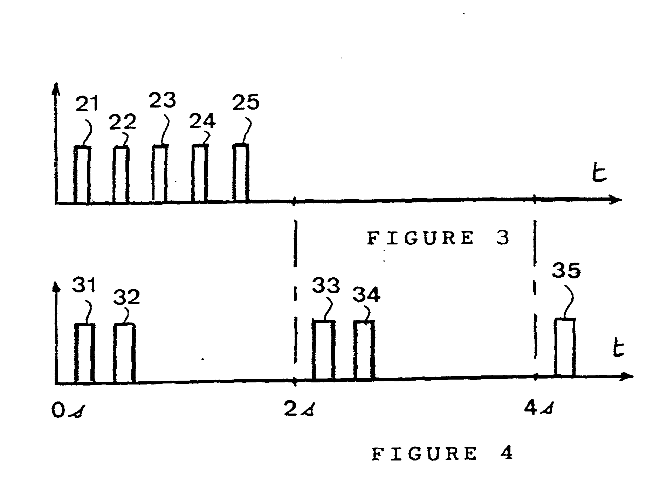

Les figures 3 et 4 illustrent le fonctionnement du système 9.

Les mesures du capteur de pression 1 sont émises toutes les six minutes lorsque la roue tourne et, sinon, toutes les heures. Un capteur à inertie, non représenté, tel qu'une ampoule Reed, commande à cet effet le processeur 2.

Celui-ci fonctionne avec un cycle élémentaire durant ici 2 secondes, c'est-à-dire qu'il est en veille, à faible consommation, la plupart du temps et est réveillé et activé à intervalles réguliers toutes les 2 secondes, par un temporisateur du circuit 21, pour effectuer une tâche éventuelle dans le bloc de calcul 22. Le bloc de calcul 22 garde en mémoire les instants des dernières émissions radio qu'il a commandées, pour déterminer, d'après l'heure courante, s'il doit effectuer une nouvelle émission, d'un nouveau train ou d'une nouvelle rafale dans un train.

Une mesure de pression du capteur 1 est numérisée et mémorisée dans le processeur 2 et émise par radio par un train de cinq rafales identiques de données de pression, pour garantir sa transmission. Chaque rafale dure ici 8 ms. En fonctionnement classique (figure 3), au-dessus d'un seuil bas, ici -20°C, les rafales 21, 22, 23, 24, 25 sont espacées de 12 ms et toutes émises en début d'une même période d'activation de 2 secondes.

Au-dessus de -20°C, la pile 10 présente une résistance interne limitée à quelques ohms, qui permet d'alimenter suffisamment l'émetteur 3. Le condensateur réservoir 11, de quelques centaines de µFarad et de quelques ohms de résistance série, contribue à stabiliser la tension d'alimentation mais n'a alors qu'un rôle annexe puisque la pile 10 est aussi à faible résistance.

Par contre, si la température tombe en-dessous du seuil de -20°C, la résistance de la pile 10 s'accroît très nettement, pour atteindre une centaine d'ohms à -40°C. Le condensateur 11 conserve par contre sensiblement ses caractéristiques à cette température.

En deça du seuil de -20°C, la résistance série de la pile 10 est trop élevée pour fournir, sous la tension prévue, le courant de l'émetteur 3 lorsqu'il est actif. Afin de cependant permettre le fonctionnement de celui-ci, le processeur 2 commande l'émission des données de pression en fonction de la température, c'est-à-dire qu'il étale dans le temps les émissions. Plus précisément, en deça du seuil de -20°C, il étale l'émission des rafales d'un train sur plusieurs des intervalles d'activation de 2 secondes.

Dans cet exemple, cet étalement est progressif en fonction de la baisse de la température.

Dans le cas de la figure 4, pour lequel le capteur de température 4 indique -30°C, le processeur 2 émet deux rafales 31, 32 sur une première période, deux rafales 33, 34 sur la période suivante et une dernière rafale 35 sur la troisième période, en mémorisant à chaque fois ces éléments pour gérer les suivants.

Dans cet exemple, en cas de pluralité de rafales 31, 32 par période, ces rafales ont l'espacement prévu de 12 ms.

Si la température descend à -40°C par exemple, le processeur 2 ralentit encore le rythme moyen d'émission des rafales 31-35 en commandant l'émission d'une seule rafale par intervalle d'activation. En deça du seuil de -20°C, le condensateur 11 a un rôle principal dans la fourniture de l'énergie d'alimentation électrique dans de bonnes conditions de stabilité de tension, en particulier à l'émetteur 3 qui présente une consommation élevée lorsqu'il émet. Cette fourniture s'effectue en effet sous basse impédance (résistance). Le condensateur 11 se décharge partiellement lorsque l'émetteur 3 émet les données mais l'émission du train d'impulsions 31-35 est suffisamment étalée pour que le condensateur 11 soit suffisamment rechargé par la pile 10 lorsque l'émetteur 3 est à nouveau activé. Il peut d'ailleurs être prévu que les périodes dans lesquelles est émise une rafale soient séparées par des périodes inactives. L'ensemble pile 10 - condensateur-intégrateur 11, ainsi sollicité peu souvent, peut fournir une puissance instantanée élevée et équivaut à une pile de prix élevé qui conserverait une faible résistance à très basse température.

## Revendications

1. Système de contrôle de la pression d'un pneumatique d'une roue de véhicule comprenant
- un capteur de pression (1),
- un émetteur (3) d'émission de données de pression
- une pile d'alimentation (10),
- un capteur de température (4) et
- un processeur (2),
système **caractérisé par le fait que**
l'émission des données de pression est commandée par le processeur (2) en fonction de la température, en-deça d'un seuil de température prédéterminé.

2. Système selon la revendication 1, dans lequel un condensateur (11) est monté en parallèle sur la pile d'alimentation (10) pour assurer l'alimentation de l'émetteur (3) pendant les périodes d'émission et pour se recharger hors de ces périodes d'émission.

3. Système selon l'une des revendications 1 et 2, dans lequel les données de pression étant émises par trains de rafales identiques et le système étant activé à intervalles réguliers, le processeur (2) est agencé pour, en deça du seuil de température, étaler l'émission des rafales d'un train sur plusieurs intervalles d'activation.

4. Système selon la revendication 3, dans lequel le processeur (2) commande l'émission d'une rafale par intervalle d'activation.

5. Système selon l'une des revendications 1 à 4, dans lequel la pile (10), le condensateur (11), les capteurs (1, 4), le processeur (2) et l'émetteur (3) sont montés en parallèle.

## Patentansprüche

1. System zur Prüfung des Drucks eines Luftreifens eines Fahrzeugrads, das aufweist
- einen Druckfühler (1),
- einen Sender (3) zum Senden von Druckdaten,
- eine Speisebatterie (10),
- einen Temperaturfühler (4) und
- einen Prozessor (2),
**dadurch gekennzeichnet, dass**
das Senden von Druckdaten vom Prozessor (2) in Abhängigkeit von der Temperatur unterhalb eines vorbestimmten Temperaturschwellwerts gesteuert wird.

2. System nach Anspruch 1, bei dem ein Kondensator (11) zur Speisebatterie (10) parallelgeschaltet ist, um die Speisung des Senders (3) während der Sendeperioden zu gewährleisten und um sich außerhalb dieser Sendeperioden wieder aufzuladen.

3. System nach einem der Ansprüche 1 und 2, bei dem die Druckdaten in gleichen Folgen von Bursts gesendet werden, und das System in regelmäßigen Abständen aktiviert wird, wobei der Prozessor (2) ausgelegt ist, um unterhalb des Temperaturschwellwerts die Aussendung von Bursts einer Folge über mehrere Aktivierungsintervalle zu verteilen.

4. System nach Anspruch 3, bei dem der Prozessor (2) die Aussendung eines Bursts pro Aktivierungsintervall steuert.

5. System nach einem der Ansprüche 1 bis 4, bei dem die Batterie (10), der Kondensator (11), die Fühler (1, 4), der Prozessor (2) und der Emitter (3) parallelgeschaltet sind.

## Claims

1. System for monitoring the pressure in a vehicle tyre, comprising
- a pressure sensor (1),
- a transmitter (3) for transmitting pressure data,
- a power supply battery (10),
- a temperature sensor (4) and
- a processor (2),
this system being **characterized in that** the transmission of pressure data is controlled by the processor (2) as function of temperature, below a predetermined temperature threshold.

2. System according to Claim 1, **characterized in that** a capacitor (11) is connected in parallel with the power supply battery (10) in order to provide the power supply of the transmitter (3) during the transmitting periods and in order to become recharged outside of these transmitting periods.

3. System according to one of Claims 1 and 2, **characterized in that**, as the pressure data is transmitted in trains of identical bursts and the system is activated at regular intervals, the processor (2) is designed in order, below the temperature threshold, to spread the transmission of the bursts of a train over several activation intervals.

4. System according to Claim 3, **characterized in that** the processor (2) controls the transmission of one burst per activation interval.

5. System according to one of Claims 1 to 4, **characterized in that** the battery (10), the capacitor (11), the sensors (1, 4), the processor (2) and the transmitter (3) are connected in parallel.
